# EUROPEAN PATENT SPECIFICATION

(11) **EP 0 719 995 B1**
(45) Date of publication and mention of the grant of the patent: **28.07.2004**
(21) Application number: 95120665.5
(22) Date of filing: 28.12.1995
(51) Int. Cl.: F25D 29/00, F25D 17/06

(54) **Refrigerator**
Kühlschrank
Réfrigérateur

(30) Priority: 28.12.1994 JP 32897494
(43) Date of publication of application: 03.07.1996
(73) Proprietor: KABUSHIKI KAISHA TOSHIBA, Kawasaki-shi, Kanagawa-ken 210-8572 (JP)
(72) Inventor: Myojin, Kazuhisa, Fujisawa-shi, Kanagawa-ken (JP); Kashima, Koji, Yokohama-shi, Kanagawa-ken (JP); Sano, Tetsuo, Fujinomiya-shi, Kanagawa-ken (JP); Ozu, Masao, Yokohama-shi, Kanagawa-ken (JP)
(74) Representative: Zangs, Rainer E., Dipl.-Ing.

(56) References cited:
- WO-A-82/03269
- DE-A- 4 207 859
- DE-A- 4 318 271
- GB-A- 2 260 816
- US-A- 2 894 378
- US-A- 4 253 130
- US-A- 4 890 459
- US-A- 5 289 162

## Description

### BACKGROUND OF THE INVENTION

### 1. Field of the Invention

The present invention relates to a refrigerator employing a refrigerant that is not harmful to global environment.

### 2. Description of the Prior Art

Many refrigerators presently employ chlorofluorocarbon (CFC)-based refrigerants that are stable and easy to handle. The CFC-based refrigerants, however, are harmful to global environment because they damage the ozone layer. Accordingly, they are going to be totally prohibited from use after a preparatory period.

Compared with the CFC-based refrigerants, hydrofluorocarbon (HFC)-based refrigerants do not damage the ozone layer. They, however, promote a greenhouse effect, and therefore, European countries, in particular, plan to prohibit the use of the HFC-based refrigerants. Namely, artificially produced CFC- and HFC-based refrigerants will be prohibited from use and natural refrigerants such as hydrocarbon refrigerants will be accepted.

Although the hydrocarbon refrigerants are unharmful to environment, they are flammable. If they leak, they may explode. It is difficult to secure the safety of use of the hydrocarbon refrigerants.

DE 43 18 271 A1 discloses a refrigerator comprising control means for signalling an undesired leak of refrigerant gas from the refrigerant circuit and/or for stopping the refrigerator in a contactless manner in case such a leak is detected. For detecting the leakage, a pressure sensor, a gas sensor or a temperature sensor may for example be employed.

GB-A-2 260 816 describes a system for monitoring fluild quantities. An alarm is given if the total quantity of the refrigerant in below a predetermined level, and emergency automatic shut-off valves can be operated.

US-A-2,894,378 discloses a conventional refrigerator.

DE-A-4 207 859 shows an air conditioning system for a vehicle. In case of a collision, all the refrigerant is moved into a reservoir.

### SUMMARY OF THE INVENTION

An object of the present invention is to provide a refrigerator employing a flammable refrigerant that is unharmful to environment, capable of securing the safety of use of the flammable refrigerant.

Another object of the present invention is to provide a refrigerator employing a flammable refrigerant, capable of quickly stopping the operation thereof if the refrigerant leaks.

Still another object of the present invention is to provide a refrigerator employing a flammable refrigerant, capable of quickly diffusing the refrigerant to avoid explosion if the refrigerant leaks.

In order to accomplish the objects, the present invention provides a refrigerator according to claim 1.

The refrigerator has a compressor 17 for compressing a flammable refrigerant, a cooling fan 15, a condenser 11 for condensing and air-cooling the compressed refrigerant, an evaporator 25 for vaporizing the condensed refrigerant to chill air, a circulation path for circulating the chilled air inside the refrigerator, an inside fan 27 for circulating the chilled air through the circulation path, leak detectors S3 and S4 for detecting a leak of the refrigerant, and shutoff units a and b for blocking the flow of the refrigerant if the detectors detects a leak of the refrigerant.

The refrigerator has shutoff units 39 for stopping the chilled air from entering the circulation path if the detectors S3 and S4 detect a leak of the refrigerant.

The shutoff units 39 may be shutters disposed at the entrance and exit of the circulation path.

The refrigerator may have a unit for restarting the cooling fan 15 after the cooling fan 15 is stopped for a given period.

The rotation speed of the cooling fan 15 is higher in a refrigeration cycle than in a stoppage of the refrigeration cycle.

The refrigerator may comprise a unit for driving the inside fan 27 for a predetermined period after a door of the refrigerator is opened and stopping the inside fan 27 after the predetermined period.

### BRIEF DESCRIPTION OF THE DRAWINGS

The aforementioned and other features and objects of the present invention and the manner of attaining them will become more apparent and the invention itself will be best understood by reference to the following description of preferred embodiments taken in conjunction with the accompanying drawings, wherein:
Fig. 1 is a plan view showing a compressor, condenser, choke, and evaporator that form a refrigeration cycle of a refrigerator according to an embodiment of the present invention;
Fig. 2 is a sectional side view showing the refrigerator;
Fig. 3 explains the refrigeration cycle;
Fig. 4 shows a compressor drive circuit and a radiation circuit of the refrigerator;
Fig. 5 shows shutoff units arranged at the entrance and exit of a circulation path of the refrigerator;
Fig. 6 is a flowchart showing the steps of detecting a leak of refrigerant from the evaporator;
Fig. 7 is a flowchart showing the steps of detecting a leak of refrigerant from the condenser;
Fig. 8 shows a shutter driven by a cam, for blocking a flow of chilled air;
Fig. 9 is a flowchart showing the operation of the shutter of Fig. 8;
Fig. 10 shows a shutter driven by a bellows, for blocking a flow of chilled air;
Fig. 11 is a flowchart showing the operation of the shutter of Fig. 10;
Fig. 12 is a circuit diagram showing a unit for withdrawing a refrigerant which is an embodiment which does not fall under the scope of protection of the set of claims;
Fig. 13 is a flowchart showing the operation of the circuit of Fig. 12;
Fig. 14 shows a unit for withdrawing a refrigerant which is an embodiment which does not fall under the scope of protection of the set of claims;
Fig. 15 is a sectional side view showing a refrigerator having a switch for detecting the opening and closing of a door of the refrigerator, according to another embodiment of the present invention;
Fig. 16 is a flowchart showing the operation of the switch of Fig. 15; and
Fig. 17 is a flowchart showing the normal-speed and low-speed operations of a cooling fan.

### DETAILED DESCRIPTION OF THE EMBODIMENTS

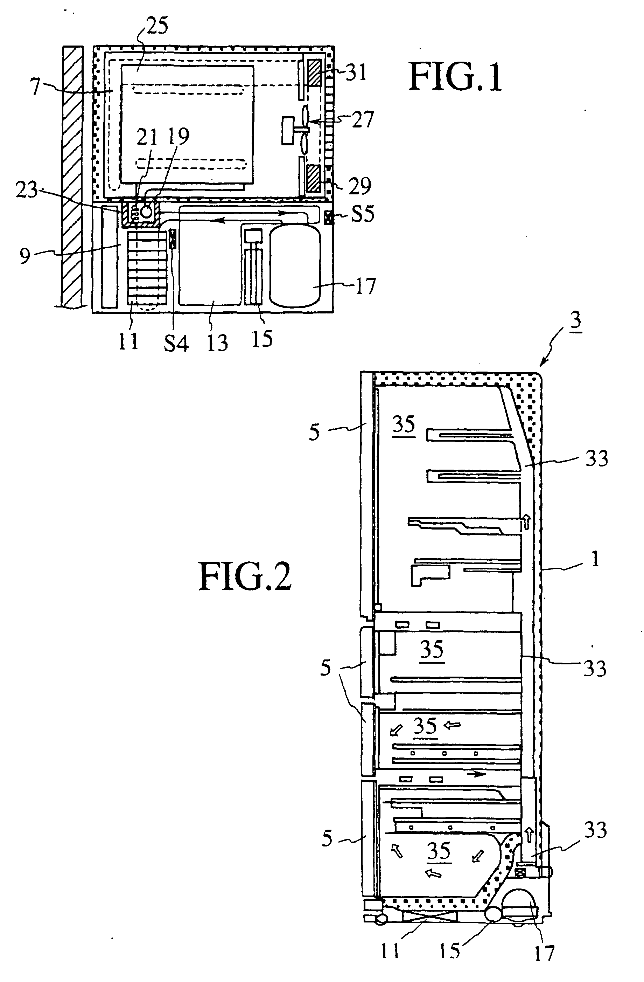

Figures 1 and 2 show a refrigerator 3 according to an embodiment of the present invention.

The refrigerator 3 has a main body 1 having doors 5. A lower part of the main body 1 includes a partitioned chamber 7 and a mechanical chamber 9. The chamber 7 is for a refrigeration cycle.

The mechanical chamber 9 accommodates a condenser 11, an evaporation plate 13, a cooling fan 15, a compressor 17, an accumulator 19, and a choke (capillary tube) 21. The accumulator 19 and choke 21 are accommodated in an independent chamber 23. In this way, devices that involve piping and connections are arranged outside the chamber 7.

The chamber 7 includes an evaporator 25, an inside fan 27, an exit 29 for chilled air, and an entrance 31 for return air. The exit 29 and entrance 31 are connected to a circulation duct 33, which communicates with the inside 35 of the refrigerator 3.

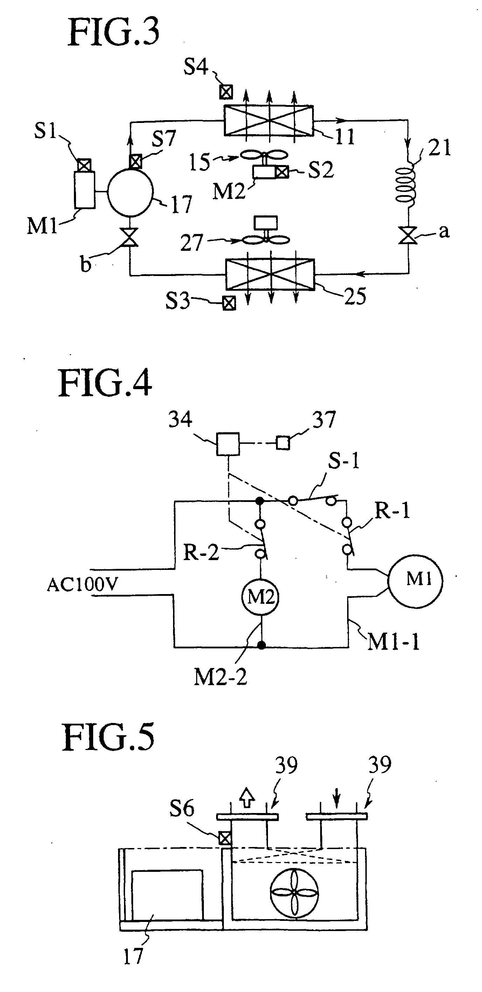

Figure 3 shows the refrigeration cycle employing a natural refrigerant made of hydrocarbons such as propane and isobutane. These hydrocarbons are flammable, and therefore, it is important to secure the safety of use of them.

The compressor 17 discharges the refrigerant, which passes through the condenser 11, choke 21, and evaporator 25 and returns to the compressor 17. The evaporator 25 has fins to absorb latent heat from environmental air, to thereby chill the air. The chilled air is blown by the inside fan 27 into the exit 29.

Figure 4 shows a motor M1 for driving the compressor 17 and a motor M2 for driving the cooling fan 15. The motor M1 is turned ON and OFF by a drive circuit M1-1, and the motor M2 by a drive circuit M2-2.

The drive circuit M1-1 has a contact R-1, and the drive circuit M2-2 has a contact R-2. These contacts are opened and closed by a controller 34. A thermal switch S-1 opens the contact R-1 without regard to a signal from the controller 34.

A detector S1 detects an abnormality in the motor M1. A detector S2 detects an abnormality in the motor M2. Detectors S3 and S4 detect a leak of the refrigerant. The controller 34 receives signals from the detectors S1 to S4, carries out necessary operations, and provides instruction signals.

An abnormality of the motors M1 and M2 may be detected according to the insulation resistance of a motor power source, a motor revolution speed, or the temperature of a coil. Upon receiving an abnormality signal from any one of the detectors S1 and S2 of the motors M1 and M2, the controller 34 opens the contact R-1 of the compressor drive circuit M1-1, or the contact R-2 of the cooling fan drive circuit M2-2.

The detector S3 is arranged on the downstream of the evaporator 25 in a flow of air crossing the evaporator 25. The detector S4 is arranged on the downstream of the condenser 11 in a flow of air crossing the condenser 11. The detectors S3 and S4 may be arranged around the piping and connections including the accumulator 19, or at a position S5 on the downstream of the compressor 17 in a flow of air crossing the compressor 17, or at a position S6 in the vicinity of the exit 29.

The detectors S3 and S4 may be oxygen sensors that detect oxygen in the refrigerant that flows in the refrigeration cycle. Namely, when the refrigerant leaks, oxygen enters in the refrigeration cycle, and the oxygen sensors detect such oxygen. Signals from the oxygen sensors are received by the controller 34.

Upon receiving a leak signal from any one of the detectors S3 and S4 during a refrigeration cycle, the controller 34 opens the contact R-1 of the compressor drive circuit M1-1 and closes the contact R-2 of the cooling fan drive circuit M2-2. At the same time, the controller 34 turns ON an alarm 37, which may be an alarm buzzer or lamp. In addition, the controller 34 stops the inside fan 27 and closes shutoff valves a and b. The shutoff valve a is arranged between the choke 21 and the evaporator 25, and the shutoff valve b is arranged between the evaporator 25 and the compressor 17 as shown in Fig. 3.

Upon receiving a leak signal from any one of the detectors S3 and S4 during the stoppage of the refrigeration cycle, the controller 34 closes the contact R-2 of the cooling fan drive circuit M2-2 and turns ON the alarm 37. At this time, the cooling fan 15 is used to diffuse the leaked refrigerant, and therefore, it is driven at a low speed through, for example, an inverter controller, to reduce energy consumption and noise.

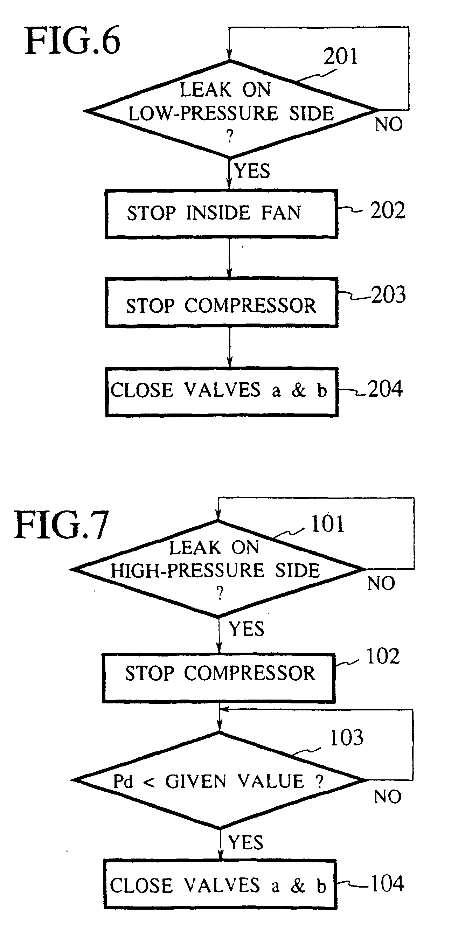

Figures 6 and 7 are flowcharts showing the operations of the shutoff valves a and b.

Figure 7 shows the steps of detecting a leak of refrigerant from the high-pressure condenser 11. In step 101, the detector S4 detects a leak of the refrigerant. In step 102, the controller 34 opens the contact R-1 of the compressor drive circuit M1-1, to stop the compressor 17. In step 103, a pressure sensor S7 disposed at the discharge side of the compressor 17 provides a discharge pressure Pd, and it is determined whether or not Pd is below a given value. If it is below the given value, step 104 closes the shutoff valves a and b to block the flow of the refrigerant.

The given value compared with the discharge pressure Pd is a saturation pressure of the refrigerant under a normal ambient temperature, preferably, a saturation pressure of the refrigerant under a temperature of ambient temperature plus 5 degrees centigrade.

As a result, the pressure of the high-pressure side is decreased, and the flammable refrigerant is confined in the piping and evaporator 25.

Figure 6 shows the steps of detecting a leak of the refrigerant from the evaporator 25 that operates at a low pressure. In step 201, the detector S3 detects a leak of the refrigerant. The controller 34 stops the inside fan 27 in step 202 and the compressor 17 in step 203, and closes the shutoff valves a and b in step 204. As a result, no refrigerant is sent into the inside 35, and the flammable refrigerant is confined in the piping and evaporator 25.

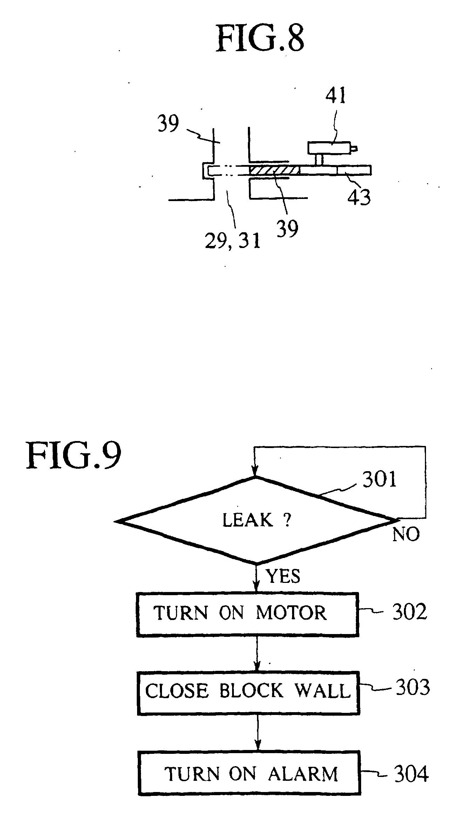

Figure 8 shows a shutter 39 arranged at each of the exit 29 and entrance 31, to shut off chilled air.

The shutter 39 is opened and closed by a cam 43 that is driven by a motor 41. Figure 9 shows the operation of the shutter 39.

The detectors S3 and S4 monitor a leak of the refrigerant in step 301. If one of them detects a leak, the controller 34 turns ON the motor 41 in step 302, to close the shutters 39 in step 303, and turns ON the alarm 37 in step 304. As a result, the path communicating with the inside 35 is blocked.

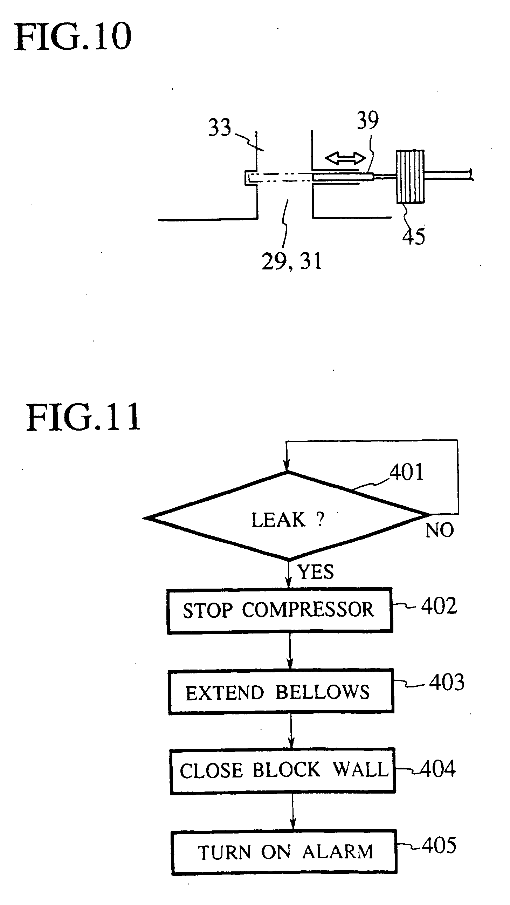

The shutters 39 are not limited to those driven by cams. Figure 10 shows a bellows 45 that is driven by the discharge pressure of the compressor 17, to open the shutter 39. Fig. 11 shows the operation of the bellows 45.

The detectors S3 and S4 monitor a leak of the refrigerant in step 401. If one of them detects a leak, the controller 34 stops the compressor 17 in step 402, expands the bellows 45 in step 403, to close the shutters 39 in step 404, and turns ON the alarm 37 in step 405. As a result, the path communicating with the inside 35 is blocked.

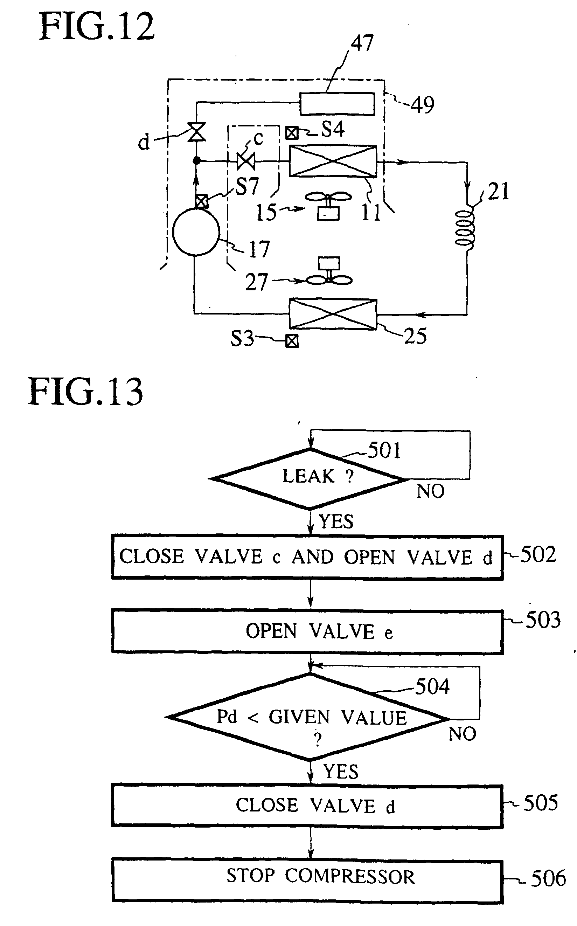

Figure 12 shows a unit for withdrawing the refrigerant from the refrigeration cycle if the refrigerant leaks.

The refrigeration cycle is formed of the compressor 17, condenser 11, choke 21, and evaporator 25. A withdrawal tank 47 for withdrawing the refrigerant is arranged in parallel with the condenser 11 on the discharge side of the compressor 17. A shutoff valve c stops the flow of the refrigerant to the condenser 11, and a shutoff valve d stops the flow of the refrigerant to the tank 47. The tank 47 is positioned on the downstream of the cooling fan 15 so that the tank 47 is cooled to withdraw the refrigerant.

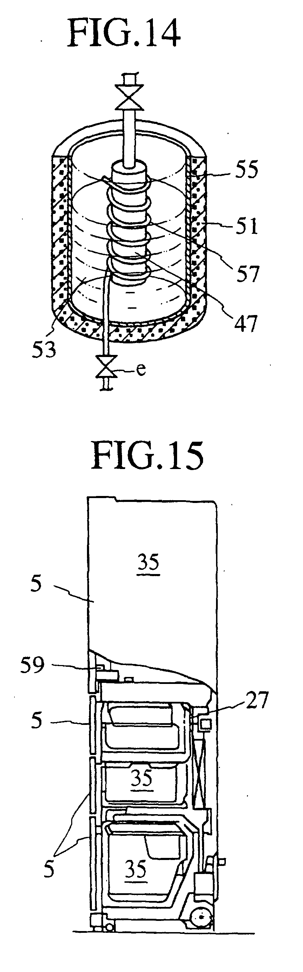

Figure 14 shows an arrangement for cooling the withdrawal tank 47. The tank 47 is installed in a cooling tank 55. The cooling tank 55 is filled with a liquid coolant 53 such as liquid CO2 and is surrounded by a heat insulation material 51. A capillary tube 57 is wound around the tank 47. An end of the tube 57 is open to the inside of the cooling tank 55, and the other end thereof is closed by a valve e outside the cooling tank 55. When the valve e is opened, the liquid coolant 53 is vaporized and released to the atmosphere, to thereby rapidly decrease the temperature of the tank 47.

Figure 13 is a flowchart showing the operations of the valves c, d, and e. In step 501, the detectors S3 and S4 monitor a leak of the refrigerant. If one of them detects a leak, the controller 34 closes the valve c and opens the valve d in step 502. As a result, the refrigerant from the compressor 17 is fed into the withdrawal tank 47, and therefore, the liquid coolant 53 is vaporized to increase the pressure of the cooling tank 55. Then, the controller 34 opens the valve e in step 503 to cool the tank 47 due to a sudden expansion of the liquid coolant 53 in the tank 55. At this time, the high-pressure refrigerant in the tank 47 is liquefied to reduce the pressure thereof. In this way, the refrigerant is collected and liquefied in the tank 47.

Step 504 determines whether or not the discharge pressure Pd of the compressor 17 detected by the pressure sensor S7 is below a given value. If the pressure Pd is below the given value, step 505 closes the valve d, and step 506 stops the compressor 17.

Figure 15 shows a refrigerator capable of safely using a flammable refrigerant according to another embodiment of the present invention. The refrigerator has a door 5 having a switch 59 for detecting whether or not the door 5 is open. In response to a signal from the switch 59, an inside fan 27 is turned ON/OFF.

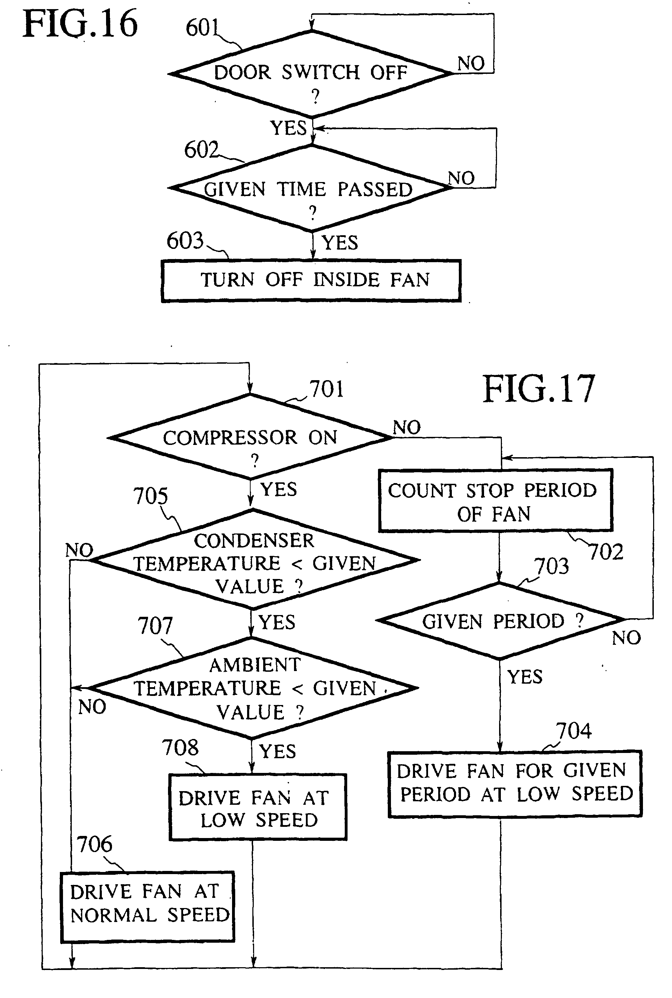

Figure 16 is a flowchart showing the operations of the inside fan 27 and switch 59. Step 601 determines whether the switch 59 is ON or OFF, i.e., whether the door 5 is opened or closed. If the door 5 is opened, step 602 determines whether or not the door 5 has been opened for a given period. If YES, step 603 stops the inside fan 27. If the refrigerant leaks into the inside 35 of the refrigerator, the inside fan 27 diffuses the leaked refrigerant and purges the same outside through the opened door 5 so that the concentration of the leaked refrigerant may not reach a flammable level.

In any one of the embodiments mentioned above, the cooling fan 15 may be operated at a low speed depending on the temperature of the condenser 11 or an ambient temperature. Figure 17 is a flowchart showing the normal- and low-speed operations of the cooling fan 15.

Step 701 determines whether or not the compressor 17 is ON. If it is stopped, step 702 counts a period for which the fan 15 is stopped. Step 703 determines whether or not the stop period of the fan 15 has reached a given value, and if not, step 702 is repeated. If step 703 provides YES, step 704 drives the fan 15 for a predetermined period at a low speed.

If the compressor 17 is ON in step 701, step 705 determines whether or not the temperature of the condenser 11 is below a given value. If it is above the given value, step 706 drives the fan 15 at a normal speed. If it is below the given value, step 707 determines whether or not an ambient temperature is below a given value. If it is below the given value, step 708 drives the fan 15 at a low speed. If it is above the given value, step 706 drives the fan 15 at the normal speed.

As explained above, the compressor 17 discharges the refrigerant, which passes through the condenser 11, choke 21, and evaporator 25 and returns to the compressor 17. The evaporator 25 has fins to absorb latent heat from environmental air, to thereby chill the air. The chilled air is blown by the inside fan 27 into the inside 35 of the refrigerator.

If a leak of the refrigerant is detected, the inside fan 27 is stopped to prevent the leaked refrigerant from entering the inside 35 of the refrigerator. Then, the embodiment of Figs. 3 and 12 withdraws the refrigerant into the tank 47 and confines the refrigerant in the evaporator 25 with the shutoff valves. Accordingly, the concentration of the leaked refrigerant will never reach a flammable level, to thereby secure the safety of use of the flammable refrigerant.

If the refrigerant leaks during the stoppage of the refrigeration cycle, the cooling fan 15 is operated at a low speed to diffuse the leaked refrigerant so that the concentration thereof may not reach a flammable or explosion level.

If the refrigerant leaks in the embodiment of Fig. 15, the inside fan 27 is driven for a predetermined period when the door 5 is opened to diffuse and purge the refrigerant leaked inside the refrigerator.

As explained above, the present invention surely detects a leak of refrigerant in a refrigerator and prevents the leaked refrigerant from entering the inside of the refrigerator. The leaked refrigerant is diffused so that the concentration of the leaked refrigerant may not reach a flammable level.

In this way, the present invention secures the safety of use of a flammable refrigerant and prevents combustion or explosion even if the refrigerant leaks.

The foregoing description of preferred embodiments has been presented for purposes of illustration and description. It is not intended to be exhaustive or to limit the invention to the precise form described, and obviously many modifications and variations are possible in light of the above teaching. The embodiments were chosen in order to explain most clearly the principles of the invention and its practical application thereby to enable others in the art to utilize most effectively the invention in various embodiments and with various modifications as are suited to the particular use contemplated.

## Claims

1. A refrigerator comprising:
a compressor (17) for compressing a flammable refrigerant;
a cooling fan (15);
a condenser (11) for condensing and air-cooling the compressed refrigerant;
an evaporator (25) for vaporizing the condensed refrigerant to chill air;
a circulation path for circulating the chilled air inside the refrigerator;
an inside fan (27) for circulating the chilled air through said circulation path;
leak detection means (S3, S4) for detecting a leak of the refrigerant; and
refrigerant shutoff means (a, b) for blocking the flow of the refrigerant if said detection means detect a leak of the refrigerant,
**characterized by**
chilled air shutoff means (39) for stopping the chilled air from entering said circulation path if said detection means (S3, S4) detect a leak of the refrigerant.

2. The refrigerator according to claim 1, wherein the chilled air shutoff means (39) are shutters disposed at the entrance and exit of said circulation path, respectively.

3. The refrigerator according to any one of claims 1 and 2, further comprising means for restarting said cooling fan (15) after said cooling fan is stopped for a given period.

4. The refrigerator according to claim 3, wherein the rotation speed of said cooling fan (15) is higher in a refrigeration cycle than in a stoppage of the refrigeration cycle.

5. The refrigerant according to any one of claims 1 to 4, wherein said leak detection means (S3, S4) are each an oxygen sensor for detecting oxygen in the refrigeration cycle.

6. The refrigerator according to any one of claims 1 to 5, further comprising motor abnormality detection means (S1, S2) for detecting an abnormality of motors for driving said cooling fan (15) and compressor (17).

7. The refrigerator according to claim 6, wherein said motor abnormality detection means (S1, S2) detect an abnormality in the insulation resistance of electric wiring of the motors.

8. The refrigerator according to claim 6, wherein said motor abnormality detection means (S1, S2) detect an abnormality in the revolution speeds of the motors.

9. The refrigerator according to claim 6, wherein said motor abnormality detection means (S1, S2) detect an abnormality in the temperatures of coils of the motors.

10. The refrigerator according to claim 6, further comprising alarm means for generating an alarm according to a signal from said motor abnormality detection means (S1, S2).

11. The refrigerator according to any one of claims 1 to 10, further comprising means for driving said inside fan (27) for a predetermined period after the door is opened and stopping said inside fan (27) after the predetermined period.

## Patentansprüche

1. Kühlschrank mit einem Kompressor (17) zum Komprimieren eines entflammbaren Kühlmittels; einem Kühlventilator (15); einem Kondensator (11) zum Kondensieren und Luftkühlen des komprimierten Kühlmittels; einem Verdampfer (25) zum Verdampfen des kondensierten Kühlmittels, um Luft zu kühlen; einem Kreislauf zum Umlaufenlassen der gekühlten Luft innerhalb des Kühlschranks; einem inneren Ventilator (27) zum Umlaufenlassen der gekühlten Luft durch den Kreislauf hindurch; Leckage-Erfassungsmittel (S3, S4) zum Erfassen eines Lecks des Kühlmittels; und Kühlmittel-Blockiermittel (a, b) zum Blockieren des Stroms des Kühlmittels, wenn die Erfassungsmittel ein Leck des Kühlmittels erfassen,
**gekennzeichnet durch**
Kühlluft-Blockiermittel (39), um die gekühlte Luft am Eintritt in den Kreislauf zu hindern, wenn die Erfassungsmittel (S3, S4) ein Leck des Kühlmittels erfassen.

2. Kühlschrank nach Anspruch 1, worin die Kühlluft-Blockiermittel (39) Verschlüsse sind, die am Eingang bzw. Ausgang des Kreislaufs vorgesehen sind.

3. Kühlschrank nach einem der Ansprüche 1 und 2, weiter mit Mitteln zum Neustarten des Kühlventilators (15), nachdem der Kühlventilator für einen gegebenen Zeitraum angehalten war.

4. Kühlschrank nach Anspruch 3, wobei die Drehgeschwindigkeit des Kühlventilators (15) in einem Kühlzyklus höher ist als beim Halt des Kühlzyklus.

5. Kühlschrank nach einem der Ansprüche 1 bis 4, wobei die Leckage-Erfassungsmittel (S3, S4) jeweils ein Sauerstoffsensor zum Erfassen von Sauerstoff in dem Kühlkreislauf sind.

6. Kühlschrank nach einem der Ansprüche 1 bis 5, weiter mit Mitteln (S1, S2) zum Erfassen einer Anomalie von Motoren zum Antreiben des Kühlventilators (15) und des Kompressors (17).

7. Kühlschrank nach Anspruch 6, wobei diese Mittel (S1, S2) eine Anomalie in dem Isolationswiderstand der elektrischen Verdrahtung der Motoren erfassen.

8. Kühlschrank nach Anspruch 6, wobei die Mittel (S1, S2) eine Anomalie in den Drehgeschwindigkeiten der Motoren erfassen.

9. Kühlschrank nach Anspruch 6, wobei die Mittel (S1, S2) eine Anomalie in den Temperaturen von Spulen der Motoren erfassen.

10. Kühlschrank nach Anspruch 6, weiter mit Alarmmitteln zum Erzeugen.eines Alarms gemäß einem Signal von den Mitteln (S1, S2).

11. Kühlschrank nach einem der Ansprüche 1 bis 10, mit Mitteln zum Antreiben des inneren Ventilators (27) für einen vorbestimmten Zeitraum, nachdem die Tür geöffnet wird, und zum Anhalten des inneren Ventilators (27) nach diesem vorbestimmten Zeitraum.

## Revendications

1. Réfrigérateur comprenant :
un compresseur (17) destiné à comprimer un fluide frigorigène inflammable ;
un ventilateur de refroidissement (15) ;
un condenseur (11) destiné à condenser et à refroidir par air le fluide frigorigène comprimé ;
un évaporateur (25) destiné à vaporiser le fluide frigorigène condensé afin de refroidir l'air ;
un parcours de circulation destiné à la circulation de l'air refroidi à l'intérieur du réfrigérateur ;
un ventilateur interne (27) destiné à la circulation de l'air refroidi à travers ledit parcours de circulation ;
des moyens de détection de fuite (S3, S4) destinés à détecter une fuite du fluide frigorigène ; et
des moyens d'arrêt du fluide frigorigène (a, b) destinés à bloquer le flux du fluide frigorigène si lesdits moyens de détection détectent une fuite du fluide frigorigène,
**caractérisé par**
des moyens d'arrêt de l'air refroidi (39) destinés à empêcher l'air refroidi d'entrer dans ledit parcours de circulation si lesdits moyens de détection (S3, S4) détectent une fuite du fluide frigorigène.

2. Réfrigérateur selon la revendication 1, dans lequel les moyens d'arrêt de l'air refroidi (39) sont des obturateurs disposés respectivement à l'entrée et à la sortie dudit parcours de circulation.

3. Réfrigérateur selon l'une quelconque des revendications 1 et 2, comprenant en outre des moyens destinés à redémarrer ledit ventilateur de refroidissement (15) après que ledit ventilateur de refroidissement soit arrêté pour une période donnée.

4. Réfrigérateur selon la revendication 3, dans lequel la vitesse de rotation dudit ventilateur de refroidissement (15) est plus élevée dans un cycle de réfrigération que dans une interruption du cycle de réfrigération.

5. Réfrigérateur selon l'une quelconque des revendications 1 à 4, dans lequel lesdits moyens de détection de fuite (S3, S4) sont chacun une sonde d'oxygène destinée à détecter l'oxygène dans le cycle de réfrigération.

6. Réfrigérateur selon l'une quelconque des revendications 1 à 5, comprenant en outre des moyens de détection d'anomalie moteur (S1, S2) destinés à détecter une anomalie des moteurs destinés à entraîner ledit ventilateur de refroidissement (15) et ledit compresseur (17).

7. Réfrigérateur selon la revendication 6, dans lequel lesdits moyens de détection d'anomalie moteur (S1, S2) détectent une anomalie dans la résistance d'isolement du câblage des moteurs.

8. Réfrigérateur selon la revendication 6, dans lequel lesdits moyens de détection d'anomalie moteur (S1, S2) détectent une anomalie dans les vitesses de rotation des moteurs.

9. Réfrigérateur selon la revendication 6, dans lequel lesdits moyens de détection d'anomalie moteur (S1, S2) détectent une anomalie dans les températures des bobines des moteurs.

10. Réfrigérateur selon la revendication 6, comprenant en outre des moyens d'alarme destinés à générer une alarme selon un signal provenant desdits moyens de détection d'anomalie moteur (S1, S2).

11. Réfrigérateur selon l'une quelconque des revendications 1 à 10, comprenant en outre des moyens destinés à entraîner ledit ventilateur interne (27) pour une période prédéterminée après l'ouverture de la porte et à arrêter ledit ventilateur interne (27) après la période prédéterminée.
